# EUROPEAN PATENT SPECIFICATION

(11) **EP 1 203 281 B1**
(45) Date of publication and mention of the grant of the patent: **10.10.2012**
(21) Application number: 00953779.6
(22) Date of filing: 01.08.2000
(51) Int. Cl.: G06F 21/00

(54) **SYSTEM FOR PROTECTING INFORMATION OVER THE INTERNET**
SYSTEM UM INFORMATION ÜBER INTERNET ZU SCHÜTZEN
SYSTEME DE PROTECTION D'INFORMATIONS SUR INTERNET

(30) Priority: 02.08.1999 US 146691 P
(43) Date of publication of application: 08.05.2002
(73) Proprietor: DOT Assets No. 2 LLC, Wilmington, DE 19808 (US)
(72) Inventor: BAYER, Leonard, Rochester, NY 14610 (US); MATHIAS, Nelson, c/o HARRIS INTERACTIVE, INC., Rochester, NY 14623 (US); FROST, David, Rochester, NY 14623 (US)
(74) Representative: Ablett, Graham Keith
(86) International application number: PCT/US2000/020963
(87) International publication number: WO 2001/009703

(56) References cited:
- WO-A-96/24092
- WO-A-98/44402
- WO-A-98/44424
- WO-A-98/59309
- US-A- 5 825 890
- US-A- 5 881 287
- US-A- 6 134 661
- ARTISTSCOPE: "Artistscope releases new image protection for the Internet"[Online] February 1999 (1999-02), XP002496749 Retrieved from the Internet: URL:http://www.artistscope.net/news/1999-0 1-30.htm> [retrieved on 2008-06-11]

## Description

The present invention relates to a method for protecting information over the Internet or other public networks, and relates particularly to, a method for protecting the viewing of information at a computer system which is connected over the Internet to the system. The invention is especially suitable for conducting surveys over the Internet via a computer in which part of the survey viewed on the display of the computer must be protected from unauthorized viewing and copying. The invention may also be applied to any other application where viewing of information at a computer requires authorization and protection from copying, where rights to limited viewing of the information are received via the Internet. Viewing is generally defined herein as displaying graphics, text, video, or other information with any accompanying audio.

Conventionally, surveys or polls are a series of questions on a form presented to individuals, called voters, to sample the views of people in a given region or country for political, commercial or entertainment purposes. Surveys are typically conducted either in person, mail, or via telephone to a great number of individual voters. With the development of the Internet and its growing widespread use, surveys can now be taken by persons at their computer. For example, a system for conducting surveys over the Internet are described in US-A- 6,311, 150. Often surveys are used to test concepts, such as the packaging of a new food product, before companies make an investment in the product or to determine the best way to advertise the product. It is important in concept test surveys that the information used to convey the content of the concept be prevented from view by competitors who could use the information to the disadvantage of the company supporting the survey. This is easy in conventional surveys where the viewed information is provided in a protected environment of in-person polling. However, in surveys conducted over the Internet, the environment of the typical web browser software enables a user easily to copy downloaded information of a survey to a storage file, E-mail, or printer. Thus, it would be desirable to conduct a survey over the Internet in which content information of the survey is protected from unauthorized viewing or copying.

Complicated systems for downloading digital works to computer systems have been developed capable of providing billing and payment to the owners of the digital works based on usage, such as copying or displaying, which may be metered. For example, US-A-5,629,980, US-A-5,638,443, and US-A-5,715,403 describe a system for controlling the distribution and use of digital works in which usage rights are permanently attached to each digital work stored in repositories, and rendering systems receiving a digital work have access to the work in accordance with the usage rights attached to the work. In another example, US-A-5,982,891 provides a system for virtual distribution to electronic appliances, such as computers, to enable payment for use, and reporting of use, of content distributed to such electronic appliances. The electronic appliance can have a secure processing unit to provide a processing environment offering tamper resistance. In the electronic appliance, access to distributed content is not allowed unless control information, rules and controls, for that content is present at the appliance specifying usage. These systems, which may use encryption/decryption techniques, are complex in order that they can support traditional commercial distribution and transaction methods for digital works. Unauthorized copying of digital works is primarily prevented by the usage or control information which must be present, or permanently attached, to digital works.

WO-A-98/59309 discloses a method for measuring the exposure of panel members to electronic media. Identification tags are associated with the electronic media and one or more software agents are associated with each panel member. The software agents receive an identification tag from a cooperative media handler, which obtains an identification tag if the electronic media is presented, and a message is obtained from the software agent containing the obtained identification tag.

WO-A-98/44402 discloses a copyright protection scheme in which data is downloaded from a server, typically over the World Wide Web to a client, for presentation to a user. The downloaded data is cryptographically protected, by encryption and hashing. When displayed by the client, storing and copying functions are selectively disabled in respect of the data, in order to prevent unauthorized copying. More specifically, the, method may include downloading a program object to the client, running the program object on the client such that a request is uploaded to the server for a file containing the cryptographically protected data, downloading the file to the client, and rendering the cryptographically protected data in an unprotected form suitable for presentation to the user, the program object being operative such that no, or restricted, copy or save functions are offered to the user in respect of the downloaded data in its unprotected form.

WO-A-98/44424 discloses transferring at least one Internet hypertext document between a server and a client and in which at least a portion of the document is analyzed by a converter by parsing on a syntactic level to determine a standard used by the server to encode the portion of the document, and in which at least a portion of the analyzed document is replaced with other information which uses a second standard.

US-A-5,881,287 relates to a method of file protection for a computer system in which selected files are encrypted using an encryption key. If files requested from an application program are determined not to be one of the selected files, then a read request is allowed. If they are one of the selected files, a table which matches a registered application program signature with the application program is used to select a registered encryption key associated with the registered application program signature. The requested file is then decrypted using the registered encryption key and is loaded into a portion of memory assigned to the application program. A protected window is blacked out when being tried to be copied by PRINT SCREEN etc.

WO-A-96/24092 relates to a method and a system for managing a data object so as to comply with predetermined conditions for usage thereof. The data object is stored in a memory device where it is accessible by means of a data object provider's data processor. The processor creates a set of control data, defining usages of the data object which comply with the predetermined conditions. The data object is concatenated with the user set of control data, encrypted and transferred to the user. When the user wants to use the data object, a special user program checks whether the usage complies with the control data. If so, the usage is enabled. Otherwise it is disabled.

The internet publication http://www.artistcope.net/news/ 1999-01-30.htm entitled "Artistscope releases new image protection for the Internet" and dated February 1999 (1999-02) describes the encryption of a normal image which is then inserted into an applet viewer that sits on an html page rather than placing the image itself onto the page. The encrypted image is unusable unless displayed from its viewer. It is only the encrypted images that are loaded to the server.

It is the principal feature of the present invention to provide an improved method for protecting information over the Internet from unauthorized viewing and copying.

It is another feature of the present invention to provide an improved method for protecting information over the Internet transmitted to a computer as part of a survey.

A still further feature of the present invention is to provide an improved method for protecting information over the Internet transmitted in a content file to a computer in which no specific usage control information, I. e., information defining how the content file may be used, is provided, or otherwise associated with the transmitted content file, in contrast with prior art distribution systems for digital works.

Yet another feature of the present invention is to provide an improved method for protecting information over the Internet in which a network computer can enable a client computer having received an encrypted content files to be authenticated by the network computer using a plurality of identifiers before the client computer can receive a key to decrypt the content file.

It may also be desirable to provide an improved system for protecting information in which a computer receiving a content file has focus control to protect displayed information from the content file from being readily accessed and thereby copied.

According to one aspect of the present invention there is provided a method performed on a client computer system comprising:
receiving, at the client computer system, viewer software from a server computer system;
the client computer system registering with the server computer system;
receiving, at the registered client computer system, encrypted content sent from the server computer system;
the registered client computer system requesting a key from the server computer system for decrypting said encrypted content, wherein the request includes an identifier associated with the requesting client computer system;
responsive to said requesting, the registered client computer system receiving the key from the server computer system in the event that the server computer system has determined, using the identifier, that the request is valid; and
the registered client computer system decrypting the encrypted content using the received key;
wherein the viewer software on the registered client computer system is configured to permit display of the decrypted content, and to cause the registered client computer system to prevent copying of the decrypted content by ignoring interrupts received from user interface devices that would enable access to the decrypted content.

According to another aspect of the present invention there is provided a method performed on a server computer system comprising:
sending viewer software from the server computer system to one or more client computer systems over a network;
receiving, at the server computer system, registration information from one or more client computer systems that include said viewer software;
sending encrypted content from said server computer system to the one or more of said registered client computer systems;
the server computer system receiving, from a requesting client computer system of said registered client computer systems, a request for a key to decrypt said encrypted content, wherein the request includes an identifier associated with the requesting client computer system;
the server computer system determining, using the identifier, that the request is valid;
in response to said determining, the server computer system sending a key to decrypt the encrypted content to the requesting client computer system;
wherein the key is usable by the requesting client computer system to decrypt the encrypted content; and
wherein the viewer software is configured to permit display of the decrypted content on registered client computer systems, and to cause the registered client computer systems to prevent copying of the decrypted content by ignoring interrupts received from user interface devices that would enable access to the decrypted content.

In one embodiment, a web site is addressable by one or more client computer systems for connecting to the content protection system over the Internet or other public network. Each client computer system connects to the web site and receives a respondent identifier and viewer software. When the viewer software is installed at the client computer system, it generates a unique viewer identifier identifying the client computer system. The viewer identifier is sent to the web site for registering the viewer identifier with the respondent identifier. The web site has a database and one or more web servers coupled to the database. The database stores registration information including the viewer identifier and associated respondent identifiers for the client computer systems, encrypted content information files and keys to decrypt such files, survey invitation information for each of the surveys, and exposure limit information to determine whether content information can be viewed by a client computer system. Based on the survey invitation information, if the user of the client computer system has been selected to participate in a survey, the client computer system receives an E-mail invitation to participate including a unique survey identifier associated with the survey and the respondent identifier of the client computer system. The survey may represent any program which requires content information to be viewed in a secure environment. In response to receiving a survey, in accordance with the E-mail invitation, from the web site, or another web site, the client computer system enables the content viewer to connect to the web site of the content protection system and download a file with the encrypted content information for that survey. The downloaded file has no associated information regarding usage of the file by the client computer system. The encrypted content information is identified by a unique content identifier. The encrypted file may alternatively be provided from another source on the client computer system, such as a disk or CDROM. The viewer software sends a request to the content protection system for a key to decrypt the downloaded content information file, and includes in the request the respondent, viewer, survey, and content identifiers. The content protection system determines whether the respondent, viewer and survey identifiers match corresponding identifiers of the participants invited to take the survey stored in the database of the system, determines based on the exposure limit information whether the content information can be viewed at the client computer system, and if the survey has not yet been taken by the user at the client computer system. If so, the decryption key is sent to the client computer system and the viewer uses the key to decrypt the encrypted content information file, and then opens a viewer window to show (graphic or text) or play (video, animation, or audio) the decrypted content information on the display of the computer system. If not, an error message is sent to the client computer system. During viewing, the viewer ignores interrupts from the keyboard and mouse which typically allow the user to access information and thereby enable copying, such as a print screen key, right mouse button, or screen scraper. If the user selects another window other than the window of the viewer, the viewer stops showing the decrypted content and displays a protection image in its place. Thus, the content information is protected from authorized viewing by encryption and protected from unauthorized copying by limiting the ability of the user access to only viewing.

The foregoing features and advantages of the invention will become more apparent from a reading of the following description in connection with the accompanying drawings in which:
FIG. 1 is a block diagram of the system according to the present invention illustrating the network connection of components of the system with client computer systems;
FIG. 2 is a block diagram of the content protection system of FIG. 1 with a survey server and one of the client computer systems;
FIG. 3 illustrates the tables of the database of the content protection system of FIG. 1; FIG. 4 is a flow chart showing the encryption by the Content Encryption server of FIG. 1;
FIG. 5 is a flow chart showing the operation for downloading and registering of the viewer software from the content protection system to one of the client computer systems;
FIG. 6 is a block diagram of one of the client computer system of FIGS. 1 and 2 showing the installed viewer software; and
FIG. 7 is a flow chart showing the operation of the system for protecting content information received as part of a survey.

### Detailed Description of the Invention

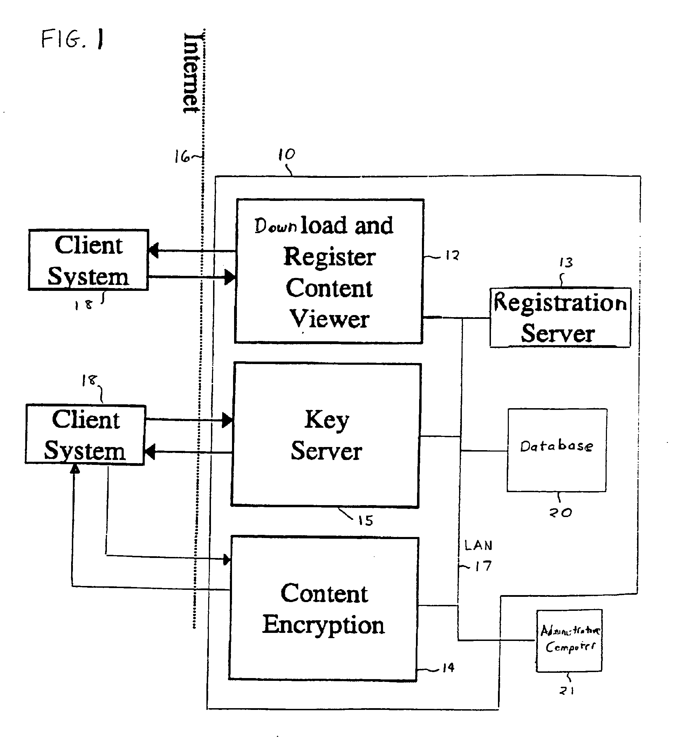

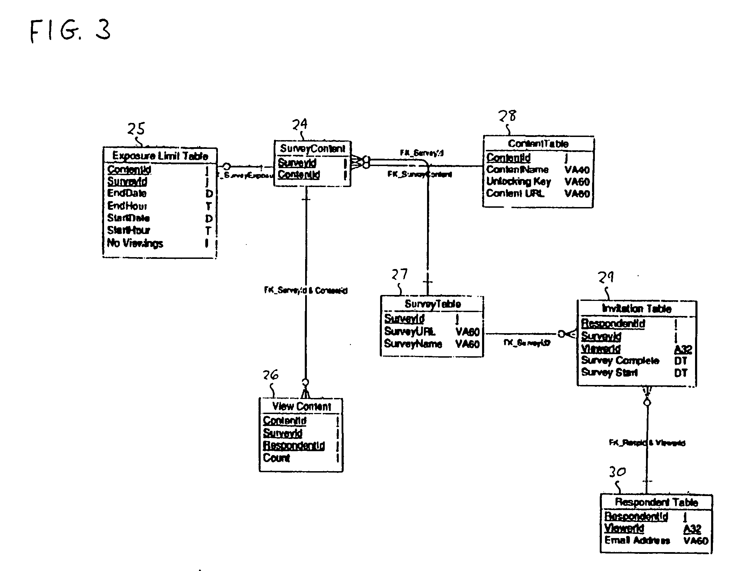

Referring to FIG. 1, the system 10 of the present invention is shown having multiple web servers 12, 13, 14, and 15 at a web site which are capable of establishing a network connection over the Internet 16 or other public network with one or more client computer systems 18. Client computer system 18 represents a desktop, laptop, WebTV, or other computer system having typical web browser software, such as Microsoft Explorer or NetScape Navigator, and network interface, such as a modem, or T1/T2 data line to an Internet Service Provider, for communicating to web sites at Internet addresses associated with such sites. The web servers 12-15 are connected to a LAN 17 and have access to database 20. The Download and Register Content Viewer server 12 is coupled to the Internet 16 and has an Internet address or URL enabling a user at client computer system 18 to connect to the web server 12 and download a file referred to as content viewer software. The Registration server 13 updates and maintains registration information in the database 20 identifying the client computer system and installed content viewer software at the client computer system. The Content Encryption server 14 provides for assigning a unique identifier to each content file representing information, such as an image, text, video, audio, or animation, encrypting the content file, determining a decryption key for the encrypted content file, and storing the content file at a URL on the server 14 or another web site on the Internet. The server 14 also allows a client computer system 18 to receive an encrypted content file at the URL associated with the file. The Key server 15 has a URL addressable by the viewer software installed at the client computer system 18 to request the decryption key associated with a downloaded encrypted file. The database 20 stores in addition to registration information and information about each encrypted content file, exposure limit information on the rules regarding when the content may be viewed and how many times the content may be viewed at a client computer system, and survey and invitation information defining the survey requiring viewing of content files and the participants (registered client computer systems) selected for each survey, as will be described later in connection to FIG. 3. The database 20 may be stored in memory, such as the hard drive or RAM, of a computer or another server, or may be contained in memory of one of servers 12-15.

One or more administrative computers represented by computer 21 can be coupled to LAN 17. The administrative computer 21 can send content files to the content encryption server 14 for encryption, and update the database with regards to the survey, invitation information and exposure limit information.

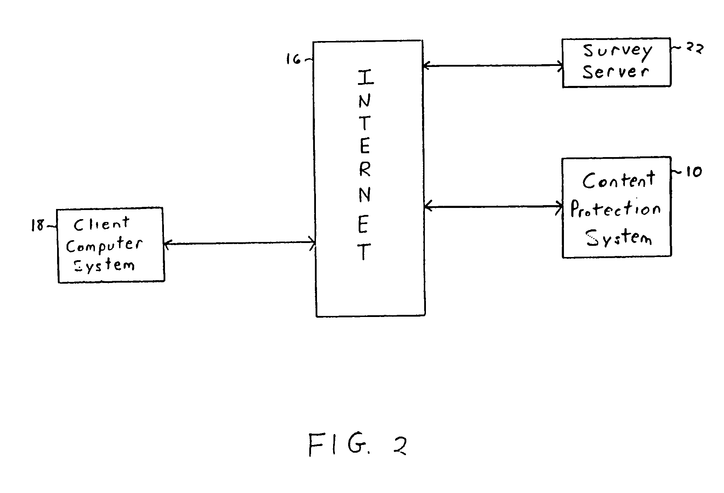

Referring to FIG. 2, the content protection system 10 of the present invention operates to enable a user to view encrypted content files which are called as part of a survey received from a survey server 22. A survey represents an HTML file which is downloaded to the client server and viewed via the web browser of the client computer system. Each survey has a unique identifier called a SurveyID. The survey may be addressed in reference to a SurveyID, or the SurveyID may be referred in the downloaded HTML file. The survey represents questions and each question has an answer set having buttons or text entry fields, which simulates a written survey, A submit button at the bottom of the survey page on the screen may be clicked upon by the user, such as via a mouse, to send the selected answers to each question to the survey server 22 for tabulation. The survey may be conducted over the Internet as described in US-A-6,311,190. A survey, which requires the user to view a content file encrypted by the content protected system before answering one or more questions, may automatically enable the content viewer, if installed on the client computer system, to connect to the URL of the content protection system's Content Encryption server 14 to first obtain the encrypted content file and then request the decryption key from the Key server 15. The user at a client computer system 18 can receive an invitation, such as in an E-mail message, to link to the address of the survey server, or the user can address the survey server. Although reference is made to a survey, the survey may represent any program or file which requires information to be viewed. Further, the survey server may be a separate web site, or can be included in the web site of the content protection system.

Records of multiple tables are stored in database 20 shown in FIG. 3. The records of the Exposure Limit 25 and ContentView 26 tables store exposure limit information. The records of the Respondent table 30 store registration information. The records of the Survey 27 and Invitation 29 tables store survey and invitation information. The records of the SurveyContent 24 and Content 28 tables store the information regarding the content files. Each table is related to each other by one or more identifiers defined as follows: ContentID is an identifier to an encrypted content file; SurveyID is the identifier of a particular survey; RespondentID is an identifier for an invitation to take a survey or view secure content; ViewerID is an identifier.which uniquely identifies a client computer system for an instance of the viewer software downloaded to a client computer system. The RespondentID need not be unique, but when combined with the ViewerID may be considered unique in representing a survey participant.

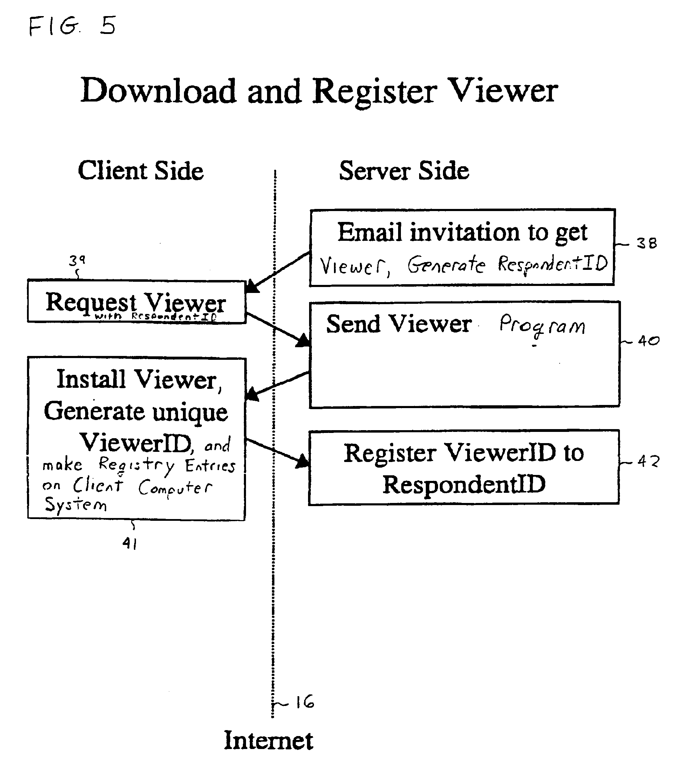

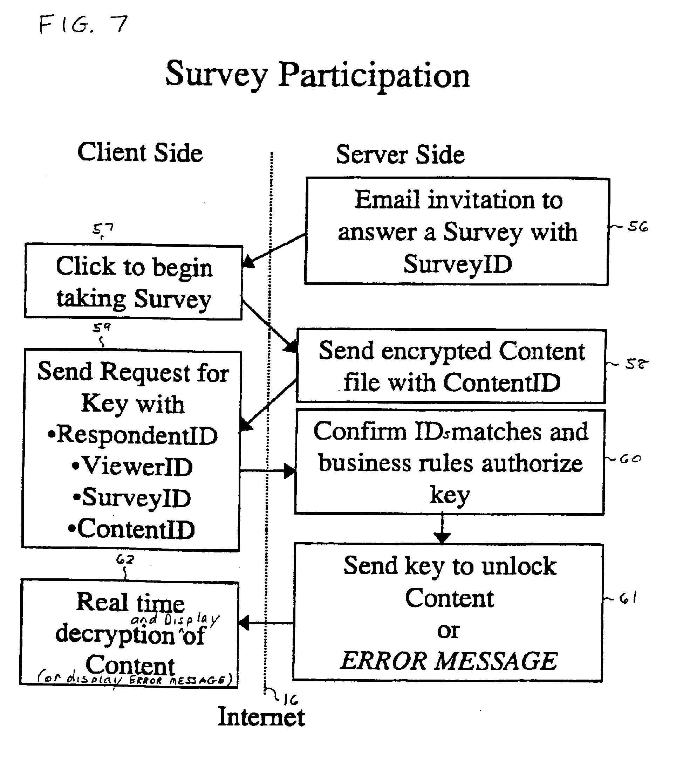

The SurveyContent table 24 has two data fields, SurveyID and ContentID. Each record in the SurveyContent table links a particular survey having the SurveyID to an encrypted content file having the ContentID. The Exposure Limit Table 25 has records with the following data fields: ContentID; SurveyID; EndDate, the last date which the encrypted file associated with the ContentID of the record can be viewed; EndHour, the time (hour and minute) on the EndDate when the encrypted file associated with the ContentID of the record can no longer be viewed; StartDate, the first date which the encrypted file of the ContentID of the record can be viewed; StartHour, the time (hour and minute) on the StartDate when the encrypted file associated with the ContentID of the record can be viewed; and No Viewing, a number indicating the number of times the encrypted file associated with the ContentID can be viewed by a client computer system. The View Content table 26 has records with the following data fields: ContentID; SurveyID; RespondentID; and Count, the number of times the client computer system associated with the RespondentID has viewed the content file associated with the ContentID for the survey associated with the SurveyID of this record. The Survey table 27 has three data fields: SurveyID; SurveyURL, the network address of the survey at the survey server; and SurveyName, the name of the survey. The Content table 28 has records with the following data fields: ContentID; ContentName, the name of the encrypted content file associated with the ContentID of this record; and Unlocking Key, the decryption key associated with the encrypted content file associated with the ContentID of this record; ContentURL, the network address where the encrypted content file of the ContentID of this record can be accessed. The Invitation Table 29 has records with the following data fields: RespondentID; SurveyID; ViewerID; Survey Complete, the date and time when the survey associated with the SurveyID was completed at the client computer system having the RespondentID and associated ViewerID; and Survey Start, the date and time when the survey associated with the SurveyID was started at the client computer system having the RespondentID for the associated viewer software ViewerID. The Respondent Table 30 has records with the following data fields: RespondentID; ViewerID associated with the RespondentID; and E-mail, the E-mail address of the RespondentID. In the example of tables 25-30 shown in FIG. 3, each of the types of different data fields are indicated by "I" for an integer number, "D" for date, "T" for time, "VA" for variable alphanumeric followed by a number indicating the maximum character length, and "A32", for a fixed length alphanumeric of 32 characters. The database tables 25-30 will further be described in connection with FIGS. 5 and 7.

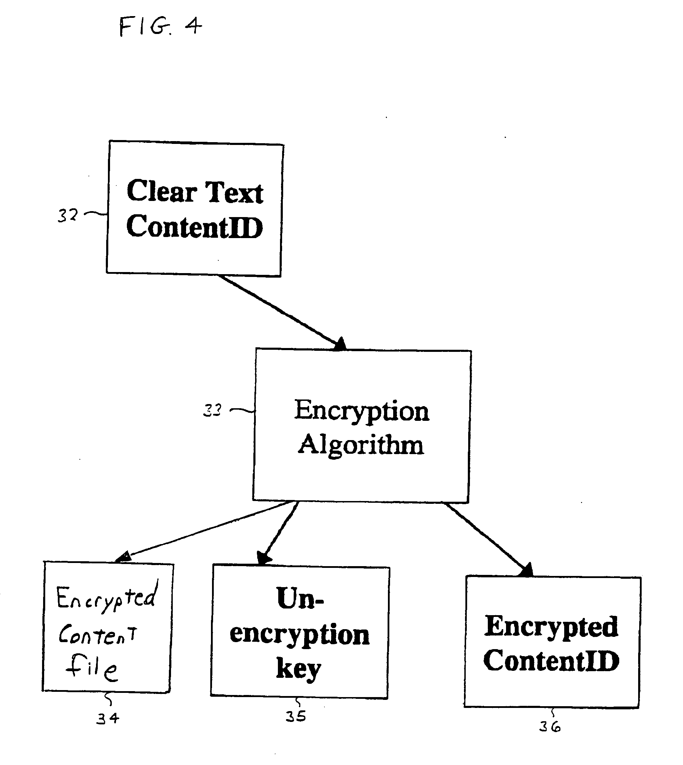

Referring to FIG. 4, the administrative computer 21 can send unencrypted (clear text) content file to the Content Encryption server 14 with a ContentID and name to be associated with the content file. The content file may contain data in the form of text, graphics, video, or audio, and can represent a commercial or advertisement for a product or service. The Content Encryption server 14 processes the unencrypted content file 32 in accordance with an encryption algorithm 33 to provide an encrypted content file 34, a decryption (unencryption) key 35, and an encrypted ContentID 36. The encryption algorithm 33 may be any type of typical encryption algorithm requiring an unencryption key associated with an encrypted file. For example, the encryption algorithm may be in accordance with the Federal Data Encryption Standard (DES). Server 14 creates a record in the Content table 28 specifying the ContentID, the Content Name, Decryption key, and the URL where the encrypted content file is stored. For a survey, multiple records are provided in the Invitation table 29 for the survey's SurveyID, where each record has a ViewerID associated with a particular client computer system and a RespondantID associated with the ViewerID for that survey. In this manner, the participates are selected for a survey. This selection may be made randomly from the pool of records of the Respondent table 30 by server 14, or the administrative computer may select each of the participants from the records of the Respondent table. The records in Respondent table 30 in addition to E-mail addresses may have data fields storing other information entered at registration, such as age or sex, or other information typically used to select participants in polling.

For each survey (or program) requiring the viewing of one or more encrypted content files, the administrative computer 21 adds a record to the SurveyContent table 24 of the database linking the encrypted content file, ContentID, with the particular survey, SurveyID. Further, a record in the Exposure Limit table 25 is created specifying for the encrypted content file, ContentID, and SurveyID, the number of viewings for each client computer system, the start date and time of the content file may be viewed, and end date and time the content file may be viewed. Further, each survey, SurveyID, may have a record in the Survey table 27 specifying the URL associated with the survey at the survey server 22, and the name of the survey. The URL may be specified by the administrative computer or by the server 14. The administrative computer may be programmed with an administrative interface for updating (adding, deleting, or changing) the records in the tables 25-30 of database 20 in which edit fields correspond to the data fields of the tables.

Before a user can participate in the survey requiring viewing of the information of a content file, the content viewer must be installed on their computer system 18. To receive the content viewer software, the content control system 10 sends from server 12 to the client computer system of a user an E-mail invitation to participate in a survey in the future with the URL of the server 12 (step 38), as shown in FIG. 5. Each E-mail invitation contains a RespondentID. The URL of server 12 enables the web browser of the client computer system 18 to link to a page at server 12 which enables the user to send a request to download of the content viewer software (step 39). This request includes the RespondentID received via the E-mail Invitation. In response to receiving the request, server 12 sends the content viewer program with an installation program (step 40). The client computer system 18 receives the content viewer and installation software, and the installation program of the viewer is manually executed by the user at the client computer system 18 to install the viewer in memory of the computer, such that it can be called when needed by a survey received from the survey server 22 (step 41). The installation program registers the content viewer in the Windows registry of the client computer system with a specific application type so a file with the same extension can invoke the viewer. The registration process generates a unique ViewerID to identify the client computer system 18, such as described below. After installation of the viewer, the E-mail invitation asks the client computer user to register the content viewer with server 12 by browsing to a URL, or via a dialog box which appear at the end of the viewer installation, to complete the registration. By connecting to this URL, the ViewerID is sent to server 12 to be stored (registered) in a record of the Respondent table 30 of the database with the RespondentID received in the E-mail invitation (step 42). The user is also asked during registration for their E-mail address and any other information to be stored in this record.

The ViewerID may be generated by a call to the Win32 system API CoCreateGUID. The ViewerID is generated to uniquely identify the client computer system 18, and may be based on: the current date and time, a clock sequence and related persistent state to deal with retrograde motion of clocks, a forcibly incremented counter to deal with high-frequency allocations, and the truly globally unique IEEE machine identifier, obtained from a network card, or other highly variable machine states. Thus, the registration process now ties together, in Respondent table 30 of database 20, the user's original E-mail address, the RespondentID sent to the user at the start of the registration process, and the ViewerID generated during viewer installation. If the user changes his E-mail address, the user must re-register his copy of the viewer, as described above.

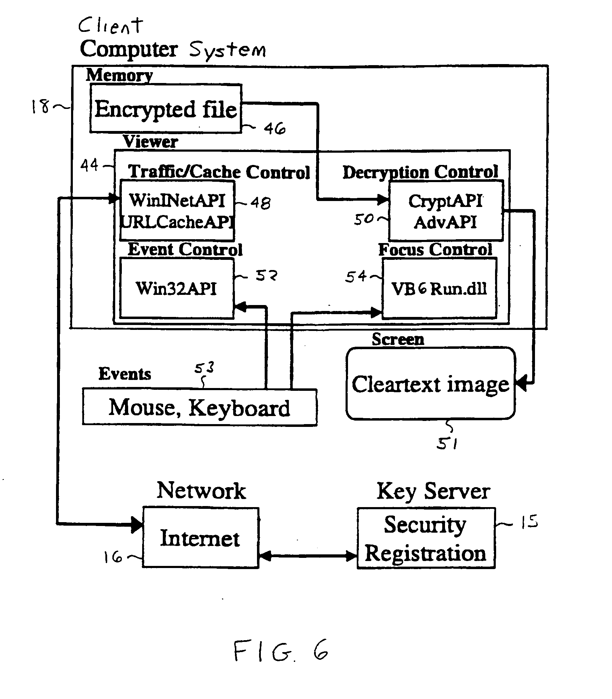

Referring to FIG. 6, the client computer system 18 and installed content viewer software 44 is shown. The client computer system 18 operates on the window operating system or platform, typically referred to as the Win32 environment. The computer 18 has memory (RAM or hard disk drive) storing the encrypted content file 46 downloaded from the web site of the content protection system. Alternatively, the encrypted content file may be stored on a disk or CDROM received via a disk or CDROM drive of the client computer system 18. The content viewer 44 has several modules, and operates using API and DLL functions (or calls to programs) in Win32, as shown in FIG. 6. In the Traffic/Cache Control Module 48, the communication with the content encryption server 14 is conducted using WinInet API calls, as typical of network communication between a web server and a client computer. Once the communication is established, the same set of API calls are used to download encrypted content from the referenced URL's. Further, at module 48, once the content is downloaded, the content is stored in the client computer's cache directory. These files are accessed using the URLCacheAPI. After the content is downloaded and decrypted, the keyboard, mouse and focus control are handled by hooks to the Win32API and the VB6 runtime DLL library. The Decryption Control Module 50 utilizes Window's CryptAPI to call to the viewer from the Window operating system for decrypting the data of encrypted file in accordance with a received decryption key, and Window's AdvAPI call to send the decrypted image to the screen of the display 51 of the client computer system 18. When a decrypted image is displayed on the screen, the Event Control Module 52, via the Win32API, monitors interrupt events 53 from the mouse and keyboard (i.e., user interface). The Focus Control Module 54 is activated if the user switches focus away from the content viewer, such as the Alt-Tab, pressing of the left button on the mouse, clicking on another window on the screen or the screen's desktop. The Focus Control Module 54 in response to a switch in focus from the user, immediately stops the viewer from showing the decrypted content information, and instead shows a protection image in the window of the content viewer, such as a gray screen with a copyright notice or other information.

Referring to FIG. 7, the operation of the system will now be described. The content protection system sends to a client computer system 18 an E-mail invitation to participate in a survey based on the records in the Invitation Table for the SurveyID associated with the survey (step 56). The Key server locates each RespondentID to participate in the survey using the records of the Invitation table associated with the SurveyID of the survey, and then related records in the Respondent Table for E-mail address associated with the RespondentID. The E-mail invitation, in addition to a message requesting their participation in the survey, includes the SurveyID and RespondentID and the URL of the survey server 22 (FIG. 2). Although this invitation is preferably E-mail, the same information may be sent to the user through regular mail or other advertising media. The invitation contains a network address of the survey server which references the SurveyID of the survey. In the case where an E-mail invitation is used, the address may be in an embedded hyperlink upon which the user clicks upon to contact the survey server and receive the HTML page with the survey. The RespondentID may be an embedded as a parameter in the URL, or the opening dialog box of the survey may request it from the user. (The RespondentID may have been given to the user, such as by display to the user, at the earlier described registration process). Upon receipt of the survey, the web browser of the client computer system operates in accordance with the HTML code of the survey to enable the viewer, which then sends a request to the web site of the content protection system for the encrypted files based upon the SurveyID (step 57). In response, the content protection system, such as server 14, queries for all records of the SurveyContent table having the SurveyID and locates the ContentID associated with the SurveyID. In addition, the SurveyStart field of the record of the Invitation table for the RespondentID is updated with the current date and time to show that the survey has commenced. The record of the Content table having the ContentID is then accessed to locate the URL where the encrypted content information file will be found. This URL points to a file which contains the location of the encrypted content. This encrypted content file is then downloaded from this URL address to the client computer system, via the content viewer, at the client computer system (step 58). If multiple records were located in the Content table for the SurveyID, each encrypted content file is separately downloaded to the client computer system immediately prior to processing.

After receiving the downloaded file, the HTML code for the survey (or the content viewer) operates the viewer to send a request, via the Internet, to the Key server 15 (FIG. 1) for the decryption key for the downloaded file (step 59). The request includes the RespondentID and ViewerID which was stored with the viewer when installed, the SurveyID of the survey, and the ContentID of the encrypted content file.

At steps 60-61, the Key server 15 receives, via the Internet 16, the request from the client computer system 18, and sends the decryption key from the record of the Content table 28 having the ContentID to the client computer system requesting the key if the Key server:
1) can locate the RespondentID, SurveyID and ViewerID of the request in the same record of the Invitation table 29;
2) the current date and time is within the specified time period, i.e., date and time range (StartDate, StartHour, and EndDate, EndHour), of the record of the Exposure Limit table 25 for the ContentID and SurveyID of the request;
3) if a record is present in the View Content table 26 having the ContentID, SurveyID, and RespondentID of the request, that the Count field of the record is less than the No Viewing field of the record in the Exposure Limit table 25 for the ContentID and SurveyID of the request; and,
4) the Survey Complete field of the Invitation table 29 having the RespondentID, SurveyID and ViewerID of the request, is not set to a date and time (i.e., indicating that the survey has not yet been taken).

If either conditions 1-4 are not true, an error message is sent to the client computer system 18 from the Key server 15. After sending the key, if a record exists in the View Content table 26 for the ContentID, SurveyID, and RespondentID of the request, the Key server increments the count value by one, otherwise the Key server adds a record in the View Content table for the ContentID, SurveyID, and RespondentID and the count value is set to one. Thus, condition 1 confirms matching of ID's to that of the request to identify preselected invited survey participants, while conditions 2-4 represent examples of business rules to authorize sending of the key. Any number or different business rules may be used, and are not limited to those specified above. For example, although preferably conditions 1-4 must be true, the system may operate using only conditions 1 and 4, if no associated record for the SurveyID are present in the Exposure Limit table or the View Content table, respectively.

The key is received by the viewer of the client computer system, the viewer decrypts in real time the encrypted file, opens a viewer window, and shows (graphic or text) or plays (video, animation, or audio) the decrypted content information on the display screen of the computer system (step 62). The viewer may call a player installed at the client computer system, such as Microsoft Media Player, in accordance with the type of decrypted content information, if needed to utilize the decrypted content information. However, if an error message is received by the client computer system instead of a key, it is also displayed on the display screen.

During viewing, the viewer checks the interrupts received from the keyboard and mouse (or other user interface device of the client computer system) and ignores the interrupts which would enable the user at the client computer potential access to the decrypted content information. If interrupt signals representing the right mouse key, print screen key, or screen scraper are received by the windows operating system, the viewer discards the interrupts. If the window loses focus, such as by the user clicking, via the mouse, on another window on the screen, the viewer window displays only a screen with a copyright notice or other message. Play of display resumes when the viewer again receives focus, such as by the user clicking, via the mouse, on the viewer window.

After viewing is completed, the user can close the viewer window and proceed to answer the questions of the survey. The user submits the answers by clicking on a button on the survey page, which sends the answers to the survey server and a message to the content protection system, i.e., Key server, that the survey was completed with the RespondentID, SurveyID and ViewerID. The survey complete field of the record in the Invitation table 29 having the RespondentID, SurveyID and ViewerID is updated with the date and time the message was received.

Upon receiving a survey invitation, if the client computer system 18 cannot call the content viewer software (since it has not been installed), the HTML code of the survey will not operate. The Key server 15 will allow the installation and registration of the content viewer. However, the client computer system 18 will still not decrypt the content for this particular survey, since there will be no corresponding record in the Invitation table of database 20. Once registered, the client computer system 18 may receive future invitations to participate in surveys with protected content that the user will be able to complete successfully.

In this manner, user interaction with the client computer system 18, via its user interface, is limited during display by the viewer to prevent access to the decrypted content file, and thereby possibly unauthorized electronic copying or printing. As the focus control limits access, no specific usage control information, defining how the content file may be used at the client computer, need be associated or attached with each content file in the client computer system, as in complex prior art distribution systems for digital works. Thus, the content file is not transmitted to the client computer system 18 with usage control information.

The data structures of the tables of the database 20 described above are exemplary. Other data structures may be used with different tables for storing the information described therein.

From the foregoing description, it will be apparent that an improved system for protecting information over the Internet has been provided. Variations and modifications of the herein described system and other applications for the invention will undoubtedly suggest themselves to those skilled in the art. Accordingly, the foregoing description should be taken as illustrative and not in a limiting sense.

## Claims

1. A method performed on a server computer system (10) comprising:
sending viewer software (44) from the server computer system (10) to one or more client computer systems (18) over a network (16);
receiving, at the server computer system (10), registration information from one or more client computer systems (18) that include said viewer software (44);
sending encrypted content from said server computer system (10) to the one or more of said registered client computer systems (18);
the server computer system (10) receiving, from a requesting client computer system (18) of said registered client computer systems (18), a request for a key to decrypt said encrypted content (46), wherein the request includes an identifier associated with the requesting client computer system (18);
the server computer system (10) determining, using the identifier, that the request is valid;
in response to said determining, the server computer system (10) sending a key to decrypt the encrypted content to the requesting client computer system (18);
wherein the key is usable by the requesting client computer system (18) to decrypt the encrypted content (46); and
wherein the viewer software (44) is configured to permit display of the decrypted content on registered client computer systems, and to cause the registered client computer systems (18) to prevent copying of the decrypted content by ignoring interrupts received from user interface devices that would enable access to the decrypted content.

2. A method performed on a server computer system as claimed in claim 1 further comprising preselecting one or more of said registered client computer systems (18) to view the decrypted content, and
wherein the server computer system (10) sends said key only to said preselected client computer systems (18).

3. A method performed on a server computer system as claimed in claim 1 or 2 wherein the server computer system sends said viewer software (44) over the Internet.

4. A method performed on a server computer system as claimed in any preceding claim wherein the encrypted content comprises a survey.

5. A method performed on a server computer system as claimed in any preceding claim wherein the server computer system (10) determining, using the identifier, that the request is valid, further comprises using exposure limit information, wherein the exposure limit information includes one or both of a limitation of the time when the encrypted content can be viewed by the requesting client computer system (18), and a limitation of a number of times that the encrypted content can be viewed by the requesting client computer system (18).

6. A method performed on a client computer system (18) comprising:
receiving, at the client computer system (18), viewer software (44) from a server computer system (10);
the client computer system (18) registering with the server computer system (10);
receiving, at the registered client computer system (18), encrypted content (46) sent from the server computer system (10);
the registered client computer system (18) requesting a key from the server computer system (10) for decrypting said encrypted content (46), wherein the request includes an identifier associated with the requesting client computer system (18);
responsive to said requesting, the registered client computer system (18) receiving the key from the server computer system (10) in the event that the server computer system has determined, using the identifier, that the request is valid; and
the registered client computer system (18) decrypting the encrypted content (46) using the received key;
wherein the viewer software (44) on the registered client computer system (18) is configured to permit display of the decrypted content, and to cause the registered client computer system (18) to prevent copying of the decrypted content by ignoring interrupts received from user interface devices that would enable access to the decrypted content.

7. A method performed on a client computer system as claimed in claim 6 wherein the viewer software (44) on the registered client computer system (18) is configured to cause the registered client computer system to ignore interrupts received from user interface devices that would enable saving or printing or screen captures of the decrypted content.

8. A method performed on a client computer system as claimed in claim 7 wherein said user interface device interrupts include interrupts corresponding to a mouse button or a print screen key.

9. A method performed on a client computer system as claimed in any one of claims 6 to 8 wherein the viewer software on the registered computer system (18) is configured to permit display of the decrypted content in a window, and to change the display of the decrypted content in the window in response to user input selecting another window.

10. A method performed on a client computer system as claimed in any one of claims 6 to 9 wherein the registered client computer system (18) requesting a key from the server computer system (10) for decrypting said encrypted content (46) further sends a content identifier for the encrypted content.

11. A server computer system (10) executing the method of any one of claims 1 to 5.

12. A client computer system (18) executing the method of any one of claims 6 to 10.

## Patentansprüche

1. Ein auf einem Server-Computersystem (10) durchgeführtes Verfahren bestehend aus:
Senden von Viewer-Software (44) vom Servercomputersystem (10) über ein Netz (16) zu einem oder mehreren Client-Computersystemen (18);
Empfang am Server-Computersystem (10) von Registrationsinformation von einem oder mehreren Client-Computersystemen (18), welche die genannte Viewer-Software (44) enthalten;
Senden von verschlüsseltem Inhalt vom genannten Server-Computersystem (10) an eines oder mehrere der genannten, registrierten Client-Computersysteme (18);
wobei das Server-Computersystem (10) von einem abrufenden Client-Computersystem (18) der genannten, registrierten Client-Computersysteme (18) eine Anfrage nach einem Schlüssel zur Entschlüsselung des genannten verschlüsselten Inhalts (46) erhält, wobei die Anfrage einen Identifikator enthält, der mit dem abrufenden Client-Computersystem (18) assoziiert ist;
wobei das Server-Computersystem (10) unter Verwendung des Identifikators bestimmt, dass die Anfrage gültig ist;
wobei das Server-Computersystem (10) in Reaktion auf die genannte Bestimmung einen Schlüssel zur Entschlüsselung des verschlüsselten Inhalts an das abrufende Client-Computersystem (18) sendet;
wobei der Schlüssel durch das abfragende Client-Computersystem (18) zur Entschlüsselung des verschlüsselten Inhalts (46) verwendet werden kann; und
wobei die Viewer-Software (44) so konfiguriert ist, dass sie das Display des verschlüsselten Inhalts auf dem registrierten Client-Computersystem (18) erlaubt und verursacht, dass das registrierte Client-Computersystem (18) das Kopieren des verschlüsselten Inhalts verhindert, indem es Unterbrechungen ignoriert, die von User-Schnittstelleneinrichtungen eingehen, die Zugang zum verschlüsselten Inhalt ermöglichen würden.

2. Ein auf einem Server-Computersystem entsprechend Anspruch 1 durgeführtes Verfahren, zu dem weiterhin die Vorauswahl von einem oder mehreren registrierten Client-Computersystemen (18) zur Einsicht in den entschlüsselten Inhalt gehört, und
wobei das Server-Computersystem (10) den genannten Schlüssel nur an die genannten vorausgewählten Client-Computersysteme (18) sendet.

3. Ein auf einem Server-Computersystem entsprechend Anspruch 1 oder 2 durgeführtes Verfahren, wobei das Server-Computersystem die genannte Viewer-Software (44) über das Internet sendet.

4. Ein auf einem Server-Computersystem entsprechend einem der vorangegangenen Ansprüche durgeführtes Verfahren, wobei der verschlüsselte Inhalt eine Umfrage ist.

5. Ein auf einem Server-Computersystem entsprechend einem der vorangegangenen Ansprüche durgeführtes Verfahren, wobei die Bestimmung des Server-Computersystems (10) unter Verwendung des Identifikators; dass die Anfrage gültig ist, weiterhin die Verwendung von expositionsbegrenzende Information umfasst, wobei die expositionsbegrenzende Information eine oder beide Einschränkungen umfasst, nämlich wann der verschlüsselte Inhalt vom abfragenden Client-Computersystem (18) eingesehen werden und wie oft der verschlüsselte Inhalt vom abfragenden Client-Computersystem (18) eingesehen werden kann.

6. Ein auf einem Client-Computersystem (18) durchgeführtes Verfahren bestehend aus:
Empfang von Viewer-Software (44) vom einem Server-Computersystem (10) auf dem Client-Computersystem (18);
Registration des Client-Computersystems (18) beim Server-Computersystem (10);
Empfang beim Client-Computersystem (18) von verschlüsseltem Inhalt (46), der vom genannten Server-Computersystem (10) gesandt wurde;
wobei das registrierte Client-Computersystem (18) vom Server-Computersystem (10) einen Schlüssel Entschlüsselung des genannten verschlüsselten Inhalts (46) verlangt, wobei die Anfrage einen Identifikator enthält, der mit dem abrufenden Client-Computersystem (18) assoziiert ist;
wobei das Client-Computersystem (18) in Antwort auf die genannte Anfrage vom Server-Computersystem (10) einen Schlüssel, wenn das Server-Computersystem unter Verwendung des Identifikators bestimmt hat, dass die Anfrage gültig ist; und
das registrierte Client-Computersystem (18) den verschlüsselten Inhalt (46) unter Verwendung des erhaltenen Schlüssels entschlüsselt;
wobei die Viewer-Software (44) auf dem registrierten Client-Computersystem (18) so konfiguriert ist, dass sie das Display des verschlüsselten Inhalts erlaubt und verursacht, dass das registrierte Client-Computersystem (18) das Kopieren des verschlüsselten Inhalts verhindert, indem es Unterbrechungen ignoriert, die von User-Schnittstelleneinrichtungen eingehen, die Zugang zum verschlüsselten Inhalt ermöglichen würden.

7. Ein auf einem Client-Computersystem entsprechend Anspruch 6 durgeführtes Verfahren, wobei die Viewer-Software (44) auf dem registrierten Client-Computersystem (18) so konfiguriert ist, dass sie verursacht, dass das registrierte Client-Computersystem Unterbrechungen ignoriert, die von User-Schnittstelleneinrichtungen eingehen, die Speichern oder Drucken oder Bildschirmdarstellung des verschlüsselten Inhalts ermöglichen würden.

8. Ein auf einem Client-Computersystem entsprechend Anspruch 7 durgeführtes Verfahren, wobei die genannten Unterbrechungen von User-Schnittstelleneinrichtungen Unterbrechungen sind, die einer Maustaste oder einer Druckbildschirmtaste entsprechen.

9. Ein auf einem Client-Computersystem entsprechend einem der Ansprüche 6 - 8 durgeführtes Verfahren, wobei die Viewer-Software auf dem registrierten Computersystem (18) so konfiguriert ist, dass sie das Display des verschlüsselten Inhalts in einem Window und den Wechsel des Displays des verschlüsselten Inhalts im Window in Reaktion auf eine User-Eingabe zur Wahl eines anderen Windows erlaubt.

10. Ein auf einem Client-Computersystem entsprechend einem der Ansprüche 6 - 9 durgeführtes Verfahren, wobei das registrierte Client-Computersystem (18), das vom Server-Computersystem (10) einen Schlüssel zur Entschlüsselung des genannten verschlüsselten Inhalts (46) verlangt, zudem einen Inhaltsidentifikator für den verschlüsselten Inhalt sendet.

11. Ein Server-Computersystem (10), welches das Verfahren entsprechend einem der Ansprüche 1 bis 5 durchführt.

12. Ein Client-Computersystem (18), welches das Verfahren entsprechend einem der Ansprüche 6 bis 10 durchführt.

## Revendications

1. Un procédé exécuté sur un système informatique serveur (10) comprenant :
l'envoi d'un logiciel de visualisation (44) du système informatique serveur (10) à un ou plusieurs systèmes informatiques clients (18) par l'intermédiaire d'un réseau (16),
la réception, sur le système informatique serveur (10), d'informations d'enregistrement provenant d'un ou plusieurs systèmes informatiques clients (18) qui comprennent ledit logiciel de visualisation (44),
l'envoi d'un contenu chiffré dudit système informatique serveur (10) aux un ou plusieurs desdits systèmes informatiques clients enregistrés (18),
le système informatique serveur (10) recevant, d'un système informatique client demandeur (18) desdits systèmes informatiques clients enregistrés (18), une demande pour une clé destinée à déchiffrer ledit contenu chiffré (46), où la demande contient un identifiant associé au système informatique client demandeur (18),
le système informatique serveur (10) déterminant, au moyen de l'identifiant, que la demande est valide,
en réponse à ladite détermination, le système informatique serveur (10) envoyant une clé destinée à déchiffrer le contenu chiffré au système informatique client demandeur (18),
où la clé est utilisable par le système informatique client demandeur (18) de façon à déchiffrer le contenu chiffré (46), et
où le logiciel de visualisation (44) est configuré de façon à permettre l'affichage du contenu déchiffré sur des systèmes informatiques clients enregistrés, et de façon à amener les systèmes informatiques clients enregistrés (18) à empêcher la copie du contenu déchiffré en ignorant des interruptions reçues de dispositifs d'interface utilisateur qui donneraient accès au contenu déchiffré.

2. Un procédé exécuté sur un système informatique serveur selon la Revendication 1 comprenant en outre une présélection d'un ou plusieurs desdits systèmes informatiques clients enregistrés (18) de façon à visualiser le contenu déchiffré, et
où le système informatique serveur (10) envoie ladite clé uniquement auxdits systèmes informatiques clients présélectionnés (18).

3. Un procédé exécuté sur un système informatique serveur selon la Revendication 1 ou 2 où le système informatique serveur envoie ledit logiciel de visualisation (44) par l'Internet.

4. Un procédé exécuté sur un système informatique serveur selon l'une quelconque des Revendications précédentes où le contenu chiffré comprend une enquête.

5. Un procédé exécuté sur un système informatique serveur selon l'une quelconque des Revendications précédentes où le système informatique serveur (10) détermine, au moyen de l'identifiant, que la demande est valide, comprenant en outre l'utilisation d'informations de limite d'exposition, où les informations de limite d'exposition contiennent un élément ou les deux parmi une limitation de la durée pendant laquelle le contenu chiffré peut être visualisé par le système informatique client demandeur (18) et une limitation d'un nombre de fois que le contenu chiffré peut être visualisé par le système informatique client demandeur (18).

6. Un procédé exécuté sur un système informatique client (18) comprenant :
la réception, sur le système informatique client (18), d'un logiciel de visualisation (44) provenant d'un système informatique serveur (10),
l'enregistrement du système informatique client (18) auprès du système informatique serveur (10),
la réception, sur le système informatique client enregistré (18), d'un contenu chiffré (46) envoyé du système informatique serveur (10),
le système informatique client enregistré (18) demandant une clé au système informatique serveur (10) destinée à déchiffrer ledit contenu chiffré (46), où la demande contient un identifiant associé au système informatique client demandeur (18),
en réponse à ladite demande, le système informatique client enregistré (18) recevant la clé du système informatique serveur (10) dans le cas où le système informatique serveur a déterminé, au moyen de l'identifiant, que la demande est valide, et
le système informatique client enregistré (18) déchiffrant le contenu chiffré (46) au moyen de la clé reçue,
où le logiciel de visualisation (44) sur le système informatique client enregistré (18) est configuré de façon à permettre l'affichage du contenu déchiffré, et de façon à amener le système informatique client enregistré (18) à empêcher la copie du contenu déchiffré en ignorant des interruptions reçues de dispositifs d'interface utilisateur qui donneraient un accès au contenu déchiffré.

7. Un procédé exécuté sur un système informatique client selon la Revendication 6 où le logiciel de visualisation (44) sur le système informatique client enregistré (18) est configuré de façon à amener le système informatique client enregistré à ignorer des interruptions reçues de dispositifs d'interface utilisateur qui permettraient l'enregistrement ou l'impression de captures d'écran du contenu déchiffré.

8. Un procédé exécuté sur un système informatique client selon la Revendication 7 où lesdites interruptions de dispositif d'interface utilisateur comprennent des interruptions correspondant à un bouton de souris ou une touche imprime écran.

9. Un procédé exécuté sur un système informatique client selon l'une quelconque des Revendications 6 à 8 où le logiciel de visualisation sur le système informatique enregistré (18) est configuré de façon à permettre l'affichage du contenu déchiffré dans une fenêtre, et de façon à modifier l'affichage du contenu déchiffré dans la fenêtre en réponse à une entrée d'utilisateur sélectionnant une autre fenêtre.

10. Un procédé exécuté sur un système informatique client selon l'une quelconque des Revendications 6 à 9 où le système informatique client enregistré (18) demandant une clé au système informatique serveur (10) de façon à déchiffrer ledit contenu chiffré (46) envoie en outre un identifiant de contenu pour le contenu chiffré.

11. Un système informatique serveur (10) exécutant le procédé selon l'une quelconque des Revendications 1 à 5.

12. Un système informatique client (18) exécutant le procédé selon l'une quelconque des Revendications 6 à 10.
